# EUROPEAN PATENT SPECIFICATION

(11) **EP 0 686 346 B1**
(45) Date of publication and mention of the grant of the patent: **31.03.1999**
(21) Application number: 95303757.9
(22) Date of filing: 01.06.1995
(51) Int. Cl.: A01N 43/80

(54) **Composition containing 3-isothiazolone and stabilizer**
Zusammensetzung, die 3-Isothiazolone und Stabilisatoren enthält
Composition contenant de 3-isothiazolone et stabilisateur

(30) Priority: 06.06.1994 JP 145772/94
(43) Date of publication of application: 13.12.1995
(73) Proprietor: ROHM AND HAAS COMPANY, Philadelphia, Pennsylvania 19106-2399 (US)
(72) Inventor: Matsumoto, Masahiro, Saitama Pref. 336 (JP)
(74) Representative: Angell, David Whilton

(56) References cited:
- EP-A- 0 166 611
- EP-A- 0 194 146
- EP-A- 0 375 367
- EP-A- 0 398 795
- EP-A- 0 431 752
- EP-A- 0 447 041
- EP-A- 0 490 567
- EP-A- 0 503 175
- US-A- 4 906 651

## Description

### [Utilized Field of Industry]

This invention relates to the stabilization of a 3-isothiazolone preparation not containing metallic salt, and particularly to the stabilization of a mixed preparation of 5-chloro-2-methyl-4-isothiazolin-3-one (CMI) and 2-methyl-4-isothiazolin-3-one, and more particularly aims to stabilize a 3-isothiazolone preparation by adding hexamethylenetetramine (HMT) and 5-bromo-5-nitro-1,3-dioxane to the 3-isothiazolone.

### [Prior Art]

Isothiazolone has been extensively used mainly as an antiseptic, mildewcide or algicide against microorganisms for industrial aqueous products and nonaqueous products. 3-Isothiazolone becomes a very effective biocide by substituting with an appropriate functional group and is extensively applicable.
"Biocidal" is used as a term including bactericide, germicide, slime control agent and algicide, and has bactericidal and bacteriostatic effects.
But, it has been pointed out that 3-isothiazolone preparation's activity is lowered as time passes when it is stored as it is or as being added to a substrate to be treated. This is because isothiazolone is not stable enough to be stored for a long time under the conditions of site. Therefore, a process for improving the stability of isothiazolone has been searched. Preparations which have been made commercially available include (1) a preparation prepared by adding water as a solvent to a mixture of 5-chloro-2-methyl-4-isothiazolin-3-one and 2-methyl-4-isothiazolin-3-one with nitrate of dihydric metal as a stabilizer (U.S.P. 3870795 and U.S.P. 4067878), (2) a preparation prepared by adding polyhydric alcohol as a solvent and orthoesters as a stabilizer (Japanese Unscreened Patent Pub. (Kokai) No. 157971/1989), (3) a preparation prepared by adding polyhydric alcohol as a solvent but not including a stabilizer, and (4) a preparation prepared by adding polyhydric alcohol and/or water as a solvent and a certain type of nitrobromo compound as a stabilizer. In recent years, a preparation using polyhydric alcohol or water as a solvent and hexamethylenetetramine as a stabilizer has been proposed (Japanese Unscreened Patent Pub. (Kokai) No. 132404/1993).

### [Problems to be Solved by the Invention]

When the 3-isothiazolone preparation such as (1), (2) or (3) above is used for polymeric emulsion or for paint or aqueous adhesive using such emulsion as a substrate, there have been unfavorable phenomena such as coagulation of latex and phase separation. The causes of such phenomena are considered to be the metallic salt or organic solvent that locally contacts with the emulsion at a high concentration or is insoluble in a nonaqueous medium. Some of the prior art compositions are corrosive to steel.

Therefore, isothiazolone preparations have been demanded which can be stored for a long period without forming turbidity or sediment as described above and which are non-corrosive to steel. This invention aims to solve these technical problems.

### [Means for Solving the Problems]

This invention relates to a biocidal aqueous composition containing isothiazolone consisting of (a) 3-isothiazolone compound, (b) hexamethylenetetramine, (c) 5-bromo-5-nitro-1,3-dioxane, (d) a water miscible organic solvent or a mixed solvent consisting of water and said water miscible organic solvent sufficient to dissolve components (a),(b) and (c). The 3-isothiazolone in the aqueous composition of this invention is stable for a long period, and does not form a precipitate.

Therefore, the industrial bactericidal aqueous composition of this invention can be used in the same way as conventional bactericidals and preferably used for polymeric emulsion, paint, adhesive, pigment, treating solution for printing matrix, cooling water, white water in paper making process, and cosmetics, and more preferably used for synthetic polymeric emulsion, water-based paint, cutting lubricant and others. For example, when the aqueous composition of this invention is used as an antiseptic for polymeric emulsion, it is desirable that the emulsion is not solidified and that metallic storage containers are not corroded. In view of the above, the biocidal aqueous composition of this invention will be described.

The 3-isothiazolone compound which can be used in this invention consists of a composition having a structure represented by the general formula (I): 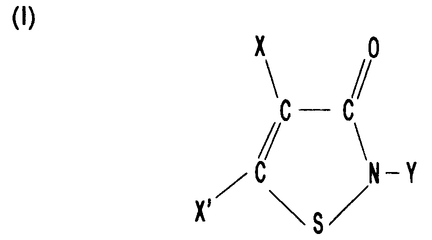 wherein X and X' respectively represent hydrogen or halogen atom, and Y represents hydrogen or alkyl group. Specifically, it includes 5-chloro-2-methyl-4-isothiazolin-3-one, 2-methyl-4-isothiazolin-3-one, 4-chloro-2-methyl-4-isothiazolin-3-one, 4,5-dichloro-2-methyl-4-isothiazolin-3-one, 5-bromo-2-methyl-4- isothiazolin-3-one, or a mixture thereof, and is particularly desired to be a mixture of 5-chloro-2-methyl-4-isothiazolin-3-one and 2-methyl-4-isothiazolin-3-one. Such 3-isothiazolone compounds are preferably present in 10% or less in the aqueous composition.

Then, HMT (b) is added to the aqueous composition of a 3-isothiazolone compound (a), which is extensively used as an industrial bactericide, as a stabilizer. The HMT is added in 0.01 to 1.0 wt%, and preferably in 0.05 to 0.5wt%. 5-Bromo-5-nitro-1,3-dioxane, which is added as a third component (c), is also broadly used as an industrial bactericidal in the same way as the above (b). This third component is added in 0.1 to 1.0 wt%, and preferably in 0.4 to 1.0 wt% to the aqueous composition of this invention.

For the aqueous composition of this invention, water and aqueous solvent sufficient to dissolve the above components (a), (b) and (c) are used. The aqueous solvents to dissolve such components are particularly desired to be water-miscible solvents, and ethylene glycol, dipropylene glycol and diethylene glycol are suitably selected. They have been broadly used as solvents for 3-isothiazolone based compounds. The aqueous composition of this invention is formed by adding the other components of this invention to a preparation which contains the 3-isothiazolone consisting of the components forming this invention. For example, to a 3-isothiazolone preparation containing glycol-based solvent, the remaining components may be added; or a 3-isothiazolone preparation containing miscible solvent, the remaining components may be added, or to this 3-isothiazolone preparation, 5-bromo-5-nitro-1,3-dioxane may be added successively to produce the aqueous composition. Obviously, these components (a) through (c) may be added simultaneously.

Examples of this invention will be described below. It is to be understood that these examples do not restrict the present invention except for being restricted by the claims. Unless otherwise specified, all % in the examples represent wt%, and the used reagents are of commercially available grade.

### [Example 1]

A mixture consisting of 5-chloro-2-methyl-isothiazolin-3-one and 2-methyl-4-isothiazolin-3-one in a ratio of 3:1 (a product of Rohm and Haas, USA) was dissolved in dipropylene glycol to prepare a solution having a concentration of 25%. To this solution, 5-bromo-5-nitro-1,3-dioxane, hexamethylenetetramine (made by Kanto Chemical Co., Ltd.) and water were added to prepare the following test solutions.

**TABLE I**

| TEST SOLUTIONS PREPARED WITH ISOTHIAZOLONE, DIOXANE AND HMT | | | |
|---|---|---|---|
| **Test solution** | **3-Isothiazolone** | **Dioxane** | **HMT** |
| 1-1 | 6.63 | 0.8 | - |
| 1-2 | 6.63 | - | 1.0 |
| 1-3 | 6.63 | 0.2 | 0.05 |
| 1-4 | 6.63 | 0.2 | 0.1 |
| 1-5 | 6.63 | 0.2 | 0.5 |
| 1-6 | 6.63 | 0.2 | 1.0 |
| 1-7 | 6.63 | 0.4 | 0.05 |
| 1-8 | 6.63 | 0.4 | 0.1 |
| 1-9 | 6.63 | 0.4 | 0.5 |
| 1-10 | 6.63 | 0.4 | 1.0 |
| 1-11 | 6.63 | 0.4 | 1.2 |
| 1-12 | 6.63 | 0.6 | 0.05 |
| 1-13 | 6.63 | 0.6 | 0.1 |
| 1-14 | 6.63 | 0.6 | 0.5 |
| 1-15 | 6.63 | 0.6 | 1.0 |
| 1-16 | 6.63 | 0.6 | 1.2 |

The test solutions were maintained at 40°C for 4 weeks. The solutions were analyzed for residual amounts of CMI for turbidity and sedimentation. The test results are shown in Table II and Table III.

**TABLE II**

| Percent Residual CMI | | | | |
|---|---|---|---|---|
| **Test solution No.** | **1 week** | **2 weeks** | **3 weeks** | **4 weeks** |
| 1-1 | 100 | 99.8 | 98.6 | 97.2 |
| 1-2 | 97.0 | 89.0 | 71.9 | 64.4 |
| 1-3 | 100 | 99.4 | 98.6 | 98.5 |
| 1-4 | 100 | 99.8 | 98.6 | 98.4 |
| 1-5 | 100 | 99.6 | 99.4 | 99.2 |
| 1-6 | 100 | 99.7 | 99.5 | 99.1 |
| 1-7 | 100 | 99.4 | 99.3 | 99.1 |
| 1-8 | 100 | 98.6 | 98.0 | 97.6 |
| 1-9 | 100 | 99.5 | 97.8 | 97.5 |
| 1-10 | 100 | 97.4 | 97.2 | 95.8 |
| 1-11 | 100 | 99.4 | 96.9 | 96.5 |
| 1-12 | 100 | 98.4 | 96.6 | 96.3 |
| 1-13 | 100 | 99.4 | 98.8 | 98.0 |
| 1-14 | 100 | 99.0 | 98.0 | 98.0 |
| 1-15 | 100 | 99.7 | 98.0 | 98.6 |
| 1-16 | 100 | 99.0 | 98.4 | 96.8 |

**TABLE III**

| TURBIDITY AND SEDIMENT FORMATION IN TEST SOLUTIONS | | | | | |
|---|---|---|---|---|---|
| **Test solution No.** | **0 week** | **1 week** | **2 weeks** | **3 weeks** | **4 weeks** |
| 1-1 | 0 | 0+ | 0+ | 0++ | 0+++ |
| 1-2 | 0 | 0+ | 0+ | 0++ | 2+++ |
| 1-3 | 0 | 0+ | 0+ | 0++ | 0++ |
| 1-4 | 0 | 0 | 0 | 0 | 0 |
| 1-5 | 0 | 0 | 0+ | 0++ | 0+ |
| 1-6 | 0 | 0 | 0+ | 0++ | 0+ |
| 1-7 | 0 | 0 | 0 | 0 | 0 |
| 1-8 | 0 | 0 | 0 | 0 | 0+ |
| 1-9 | 0 | 0 | 0 | 0 | 0+ |
| 1-10 | 0 | 0 | 0 | 0 | 0+ |
| 1-11 | 0 | 0 | 0 | 0 | 0++ |
| 1-12 | 0 | 0 | 0 | 0 | 0+ |
| 1-13 | 0 | 0 | 0 | 0 | 0+ |
| 1-14 | 0 | 0 | 0 | 0 | 0+ |
| 1-15 | 0 | 0 | 0 | 0 | 0+ |
| 1-16 | 0 | 0 | 0 | 0 | 0++ |
| Control* | 0 | 2+ | 2++ | 2+++ | 2+++ |

| | | | | | |
|---|---|---|---|---|---|
| * 3-Isothiazolone was diluted with water. | | | | | |

The numerical values indicating the test results in the table represent the following states.

| 〈Change in appearance〉 | 〈Presence of sediment〉 |
|---|---|
| 0 Completely clear | + Few sediments |
| 1 Slightly turbid | ++ Some sediments |
| 2 Turbid | +++ Many sediments |

### [Example 2]

The same procedure as described in Example 1 was used to prepare the following seven test solutions.

**TABLE IV**

| TEST SOLUTIONS PREPARED FOR CORROSIVELY EVALUATION | | | |
|---|---|---|---|
| **Test solution** | **3-isothiazolone** (%) | **5-Bromo-5-nitro- 1,3-dioxane** (%) | ***** **HMT** (%) |
| 2-1 | 6.63 | 0 | 0 |
| 2-2 | 6.63 | 0.8 | 0 |
| 2-3 | 6.63 | 0.8 | 0.01 |
| 2-4 | 6.63 | 0.8 | 0.05 |
| 2-5 | 6.63 | 0.8 | 0.1 |
| 2-6 | 6.63 | 0.8 | 0.5 |
| 2-7 | 6.63 | 0.8 | 1.0 |

| | | | |
|---|---|---|---|
| * 3-Isothiazolone was diluted with water. | | | |

Corrosivity of the test solutions was examined by placing coupons of SUS stainless steel in the solutions. The test solutions were left standing at 40°C for 4 weeks. After 4 weeks the test solutions were examined for residual CMI, appearance and sedimentation. The results are shown in Table V. Test solutions 3, 4, 5, 6 and 7 appeared transparent, free from turbidity and any sediment. Stainless steel coupons in test solutions 1, 2 and 3 showed evidence of corrosion but not in test solutions 5, 6 and 7.

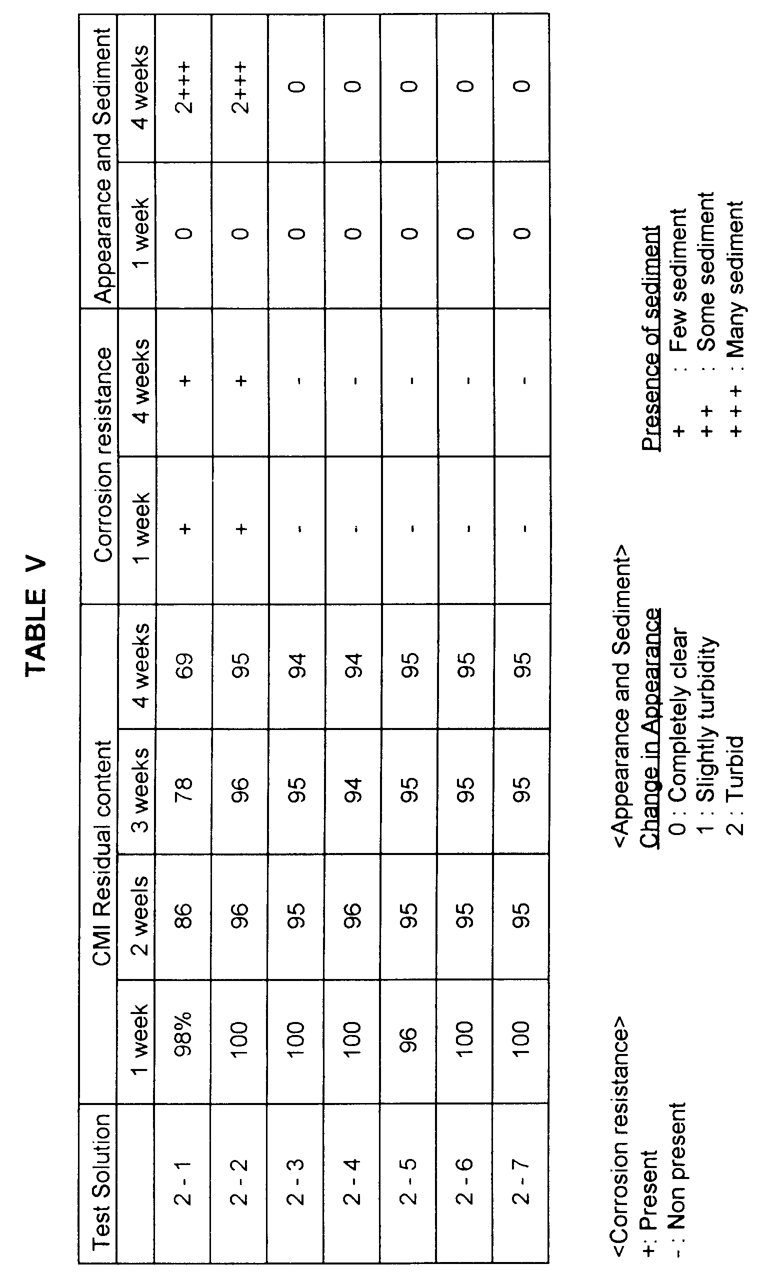

### [Effects]

As is obvious from the examples, this invention has made it possible to provide an isothiazolone solution composition which, when diluted with water, retains the activity of effective components for a long period and remains free of sediment and is stable. This invention is particularly significant in the sense of supplying a commercial product as an antiseptic for latex. Incidentally, the 3-isothiazolone solution has been found to be unstable in the presence of an aqueous solvent and magnesium nitrate has been used as a stabilizer. However, magnesium nitrate has a draw back of forming a carcinogen, nitrosamine in the 3-isothiazolone aqueous solution. Besides when the 3-isothiazolone aqueous solution is used as an antiseptic for latex products such as paint, magnesium nitrate has another drawback of coagulating the latex. This invention has accomplished its object by combining several types of stabilizers without using magnesium nitrate. This invention also provides an effect of preventing the corrosion of a metallic storage container.

## Claims

1. A stabilized biocidal aqueous composition comprising:
(a) at least one 3-isothiazolone having the general formula (I): 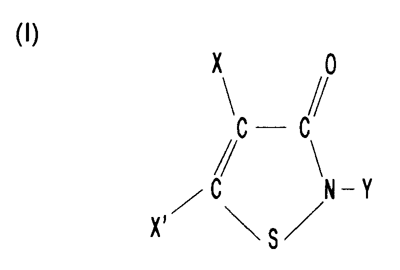 [wherein Y represents hydrogen or alkyl group, X and X' respectively represent hydrogen or halogen atom],
(b) hexamethylenetetramine,
(c) 5-bromo-5-nitro-1.3-dioxane, and
(d) a water miscible organic solvent or a mixed solvent consisting of water and said water miscible organic solvent.

2. A biocidal aqueous composition according to Claim 1, wherein the 3-isothiazolone is a mixture of 5-chloro-2-methyl-4-isothiazolin-3-one and 2-methyl-4-isothiazolin-3-one at a ratio of 3:1 to 10:1.

3. A biocidal aqueous composition according to Claim 1, wherein the hexamethylenetetramine is used in an amount of 0.01 to 1.0 wt%.

4. A biocidal aqueous composition according to Claim 1, wherein the 5-bromo-5-nitro-1.3-dioxane is used in an amount of 0.1 to 1.0wt%.

5. A biocidal aqueous composition according to Claim 1, wherein a water miscible organic solvent is dipropylene glycol.

## Patentansprüche

1. Stabilisierte biozide wäßrige Zusammensetzung, enthaltend:
(a) mindestens ein 3-Isothiazolon der allgemeinen Formel (I): 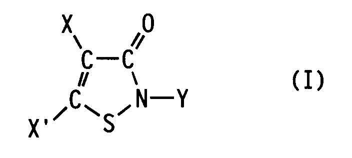 [in der Y Wasserstoff oder eine Alkylgruppe ist, X bzw. X' sind Wasserstoff oder Halogen],
(b) Hexamethylentetramin,
(c) 5-Brom-5-nitro-1,3-dioxan und
(d) ein mit Wasser mischbares organisches Lösemittel oder eine Lösemittelmischung, bestehend aus Wasser und dem mit Wasser mischbaren organischen Lösemittel.

2. Biozide wäßrige Zusammensetzung nach Anspruch 1, dadurch gekennzeichnet, daß das 3-Isothiazolon eine Mischung von 5-Chlor-2-methyl-4-isothiazolin-3-on und 2-Methyl-4-isothiazolin-3-on in einem Verhältnis von 3:1 bis 10:1 ist.

3. Biozide wäßrige Zusammensetzung nach Anspruch 1, dadurch gekennzeichnet, daß das Hexamethylentetramin in einer Menge von 0,01 bis 1,0 Gew.-% verwendet wird.

4. Biozide wäßrige Zusammensetzung nach Anspruch 1, dadurch gekennzeichnet, daß das 5-Brom-5-nitro-1,3-dioxan in einer Menge von 0,1 bis 1,0 Gew.-% verwendet wird.

5. Biozide wäßrige Zusammensetzung nach Anspruch 1, dadurch gekennzeichnet, daß das mit Wasser mischbare organische Lösemittel Dipropylenglykol ist.

## Revendications

1. Composition aqueuse biocide stabilisée comprenant :
(a) an moins une 3-isothiazolone de formule générale (I) : 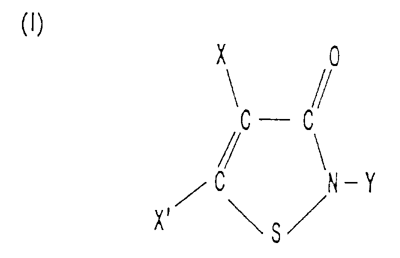 [dans laquelle Y représente un hydrogène ou un groupe alkyle, X et X' respectivement représentent un hydrogène ou un atome d'halogène],
(b) l'hexaméthylène tétramine,
(c) le 5-bromo-5-nitro-1,3-dioxanne, et
(d) un solvant organique miscible à l'eau ou un solvant mixte constitué d'eau et dudit solvant organique miscible à l'eau.

2. Composition aqueuse biocide selon la revendication 1, dans laquelle la 3-isothiazolone est un mélange de 5-chloro-2-méthyl-4-isothiazolin-3-one et de 2-méthyl-4-isothiazolin-3-one dans un rapport de 3:1 à 10:1.

3. Composition aqueuse biocide selon la revendication 1, dans laquelle l'hexaméthylène tétramine est utilisée en une quantité de 0,01 à 1,0% en poids.

4. Composition aqueuse biocide selon la revendication 1, dans laquelle le 5-bromo-5-nitro-1,3-dioxanne est utilisé en une quantité de 0,1 à 1,0% en poids.

5. Composition aqueuse biocide selon la revendication 1, dans laquelle le solvant organique miscible à l'eau est le dipropylène glycol.
